Europäisches Patentamt

European Patent Office

Office européen des brevets

(19)

(11) Veröffentlichungsnummer : **0 059 180**
**B1**

(12) EUROPÄISCHE PATENTSCHRIFT

(45) Veröffentlichungstag der Patentschrift :
26.09.84

(51) Int. Cl.³ : **A 21 C 13/02**, B 65 G 17/32

(21) Anmeldenummer : 82890024.1

(22) Anmeldetag : 19.02.82

(54) Teigstücktransportgehänge für Gärschränke od. dgl.

(30) Priorität : 20.02.81 AT 795/81

(43) Veröffentlichungstag der Anmeldung :
01.09.82 Patentblatt 82/35

(45) Bekanntmachung des Hinweises auf die Patenterteilung : 26.09.84 Patentblatt 84/39

(84) Benannte Vertragsstaaten :
DE FR GB NL

(56) Entgegenhaltungen :
EP-A- 0 022 602
DE-C-   758 101
FR-A- 2 032 344
US-A- 1 382 610

(73) Patentinhaber : König, Helmut, Dipl.-Ing.
Ursprungweg 70-72
A-8045 Graz (AT)

(72) Erfinder : König, Helmut, Dipl.-Ing.
Ursprungweg 70-72
A-8045 Graz (AT)

(74) Vertreter : Boeckmann, Peter, Dipl.-Ing. et al
Patentanwälte Dipl.-Ing. Peter Boeckmann, Dipl.-Ing.
Leo Brauneiss Strohgasse 10
A-1030 Wien (AT)

**Beschreibung**

Die Erfindung bezieht sich auf ein Teigstücktransportgehänge für Gärschränke od. dgl., welches an ein Transportsystem, insbesondere zwei zu beiden Seiten des Gehänges verlaufende Ketten, um eine horizontale Achse schwenkbar anhängbar ist, wobei die Teigstücke auf einem Textilband aufruhen, das normal zur Schwenkachse des Gehänges bewegbar ist und das auf einer Auflage flächig aufliegt, um die das Textilband in Form einer geschlossenen Schleife herumgelegt ist.

Es ist bekannt, daß Teigstücke nach dem Auswiegen und Schleifen (Wirken) einem Gärvorgang unterzogen werden müssen, bevor sie in den Backofen eingebracht werden können. Zur automatischen Druchführung dieses Gärvorganges ist es üblich, die Teigstücke auf Teigstücktransportgehängen, die an endlosen Ketten um horizontale Achsen schwenkbar befestigt sind, durch einen Gärschrank hindurchzuführen. Zumeist sind diese Gehänge mit einer muldenförmigen Auflage für die Teigstücke versehen, die mit einem Textilmaterial, zumeist Filz, ausgekleidet ist. Die Auflage selbst kann mit Löchern zur Belüftung der Teigstücke versehen sein.

Die Abgabe der Teigstücke von solchen Gehängen erfolgt dadurch, daß das Gehänge gekippt wird, so daß die Teigstücke auf eine andere Unterlage, z. B. ein Förderband, abgeworfen werden. Hiebei entstehen aber häufig Schwierigkeiten und unzulässige Beanspruchungen der Teigstücke, zumeist dadurch, daß die Teigstücke zunächst am Filzbelag des Gehänges kleben bleiben und daher nur verzögert abfallen oder dadurch, daß die Teigstücke nach der Kippung des Gehänges eine beträchtliche Fallhöhe durchfallen und daher beim Aufprall auf die Unterlage verformt werden. In der Folge kommt es zu einer unregelmäßigen Ablage der Teigstücke auf dem Förderband bzw. zu verformten Backwaren oder solchen mit Untergewicht.

Aus der DE-C-758 101 ist es bekannt geworden, auf jedem Gehänge ein um eine Antriebsrolle und eine Umlenkkante laufendes endloses Band vorzusehen, welches den Boden des Gehänges bildet und die Teigstücke trägt und durch einen Antrieb so bewegbar ist, daß die Teigstücke zu einer von der abgerundeten Umlenkkante gebildeten Ablegenase nach Kippung des Gehänges transportiert werden können. Dadurch ist zwar eine schonende Ablage der Teigstücke vom Gehänge auf die Unterlage, z. B. ein Förderband, möglich, jedoch hat diese bekannte Konstruktion den Nachteil, daß das umlaufende Band gespannt über die Antriebswalze und die Umlenkkante laufen muß, damit es von der Antriebswalze mitgenommen werden kann. Da Gehänge in modernen Gärschränken verhältnismäßig lang sein können, ist auch die Länge der die Umlenknase bildenden Stange gro, so daß das gespannte Band eine erhebliche Biegebelastung auf die Umlenkkante ausübt. Dadurch wird diese Umlenkkante durchgebogen, was einen ungleichmäßigen Lauf des Bandes zur Folge hat. Es kommt dadurch zu Faltenbildungen dieses Bandes, insbesondere im am stärksten durchgebogenen Mittelbereich der die Umlenkkante bildenden Stange, wodurch die gleichmäßige Ablage der Teigstücke nachteilig beeinflußt wird. Weiters besteht der nachteil, daß das gespannte Textilband einen elastischen Boden bildet, der beim Auffalen der Teigstücke auf das Gehänge federt, so daß die Teigstücke beim Auffallvorgang hüpfen. Dadurch können benachbarte Teigstücke miteinander in Berührung kommen, was sehr unerwünscht ist.

Aus der US-A-1 382 610 ist ein Teigstücktransportgehänge bekannt geworden, bei welchem ein Textilband in Form einer endlosen Schleife entweder um parallel zur Schwenkachse des Gehänges verlaufende Stützrollen so herumgelegt ist, daß das Teigstück auf dem oberen Teil des Textilbandes federnd aufruht, oder um eine den Gehängeboden bildende gebogene Platte passend herumgelegt ist, so daß das Teigstück auf dem auf dieser Platte aufliegenden Textilband ruht. In beiden Fällen ist bezweckt, den Abkippvorgang des Teigstückes bei der Verschwenkung des Gehänges dadurch zu beeinflussen, daß das Textilband sich relativ zum Gehänge bewegen kann. Bei der erstgenannten Variante federt jedoch die Unterlage für das Teigstück, wogegen bei der zweitgenannten Variante die Gleitbewegung des Textilbandes entlang der gebogenen Auflageplatte unzuverlässig ist, da hiebei unkontrollierbare Reibungsverhältnisse zwischen dem Textilband und der Platte einwirken. In beiden Fällen kommt es daher zu unkontrolierten Ablagevorgängen der Teigstücke von den Gehängen.

Die Erfindung setzt sich zur Aufgabe, diese Nachteile zu vermeiden und für eine gleichmäßige, schonende Ablage der Teigstücke von den Gehängen zu sorgen, ohne daß es zu Schwierigkeiten beim Aufbringen der Teigstücke auf die Gehänge kommt. Die Erfindung löst diese Aufgabe dadurch, daß das Textilband an einer Stange befestigt ist, die sich parallel zur Schwenkachse des Gehänges und normal zur Transportrichtung desselben erstreckt und durch den Antrieb zum Transport der Teigstücke zum Rand der Auflage hin bewegbar ist. Das lose auf der starren Auflage aufliegende Textilband kann nicht federn, so daß die auf das Textiland bzw. die es abstützende Auflage auffallenden Teigstücke nicht hüpfen können und dadurch ihre Relativlage beibehalten. Außerdem wird der Transport des Textilbandes im Vergleich zur eingangs geschilderten Konstruktion wesentlich sicherer gestaltet, da das Textilband zwangsweise durch die Stange mitgenommen wird und die Mitnahme des Textilbandes nicht von der Reibung zwischen einer Antriebswalze und dem Textilband abhängig ist. Da das Textilband beim Erfindungsgegenstand nicht gespannt, sondern lose ist, entfällt jegliche Zugbelastung auf einen Bauteil des Gehänges, so daß die Abwerfkante des Gehänges ihre Form stets beibehält, was den Abwerfvorgang vergleichmäßigt. Die üblicherweise von einem Blech gebildete Auflage bildet, insbesondere bei gewölbter Ausbildung, eine Versteifung des gesamten Gehänges, so daß Verwindungen bzw. Durchbiegungen des Gehänges unter Belastung der Teigstücke vermieden sind.

Für die Bewegung des Textilbandes bzw. für die Bewegung der das Textilband mitnehmenden Stange bestehen im Rahmen der Erfindung zwei bevorzugte Varianten. Die eine Variante besteht darin, daß der Antrieb einen Mitnehmer aufweist, dem ein in seine Bewegungsbahn ragender Anschlag zugeordnet ist, und daß der Mitnehmer an einem um die Schwenkachse des Gehänges oder einer dazu parallelen Achse schwenkbaren Hebel angeordnet ist, der bis nahe an die Auflage reicht und dort mittels der Stange mit dem Textilband verbunden ist. Diese Konstruktion ist sehr einfach und erfordert nur geringen Aufwand. Eine Weiterbildung dieser Konstruktion besteht darin, daß zwei Hebel an den beiden Enden der Auflage vorgesehen und durch die am Textilband befestigte Stange sowie durch eine weitere, zwischen dieser und der Schwenkachse der Hebel angeordnete Stange verbunden sind, wobei die beiden Stangen vorzugsweise durch eine Verbindung gegeneinander abgesteift sind. Dadurch werden einseitige Beanspruchungen und Verkantungen vermieden.

Die zweite bevorzugte Variante für den Antrieb der Stange besteht im Rahmen der Erfindung darin, daß die Stange durch einen Schlitz an zumindest einer seitlichen Wange des Gehänges hindurchreicht und mit ihrem außerhalb der Wange liegenden Ende den Mitnehmer bildet, dem ein bewegter Anschlag zugeordnet ist. Bei dieser Konstruktion sind sämtliche Bauteile des Antriebes außerhalb der durch die Auflage und die beiden seitlichen Wangen liegenden trogartigen Teigstückaufnahme angeordnet, so daß Berührungen der Teigstücke durch Teile dieses Antriebes unmöglich sind. Auf diese Weise können die Teigstücke, von denen ja zumeist mehrere in einer Reihe auf der Auflage eines Gehänges angeordnet sind, sehr nahe an die seitlichen Wangen heran abgelegt werden.

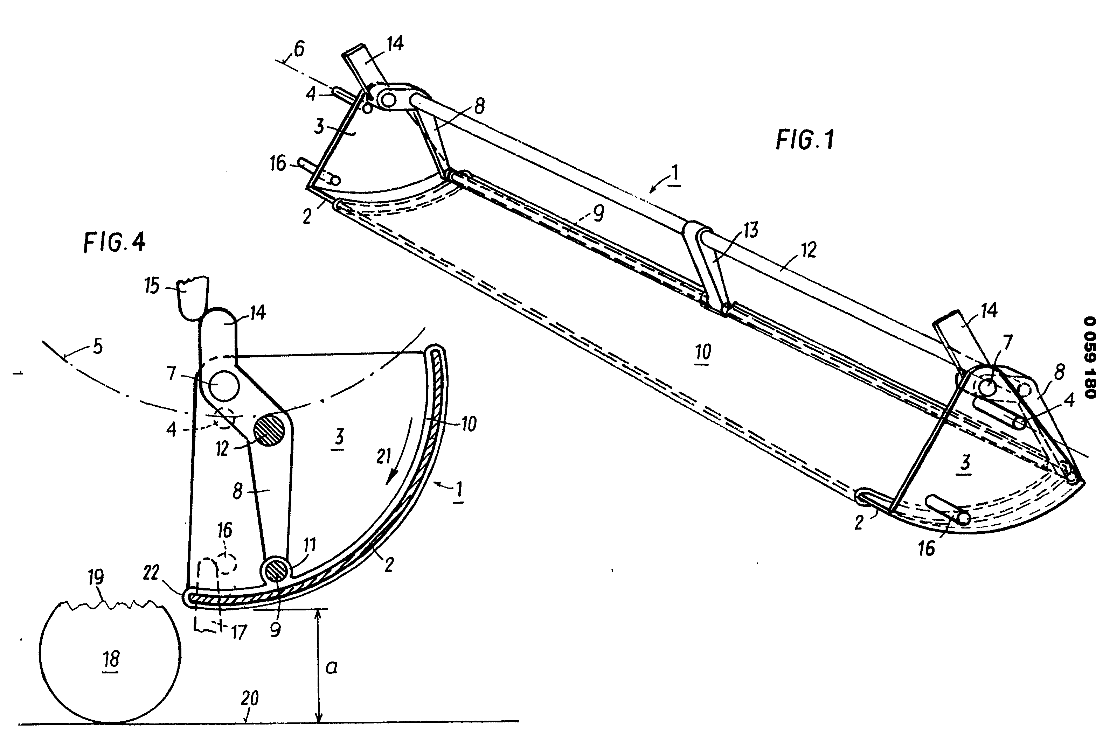

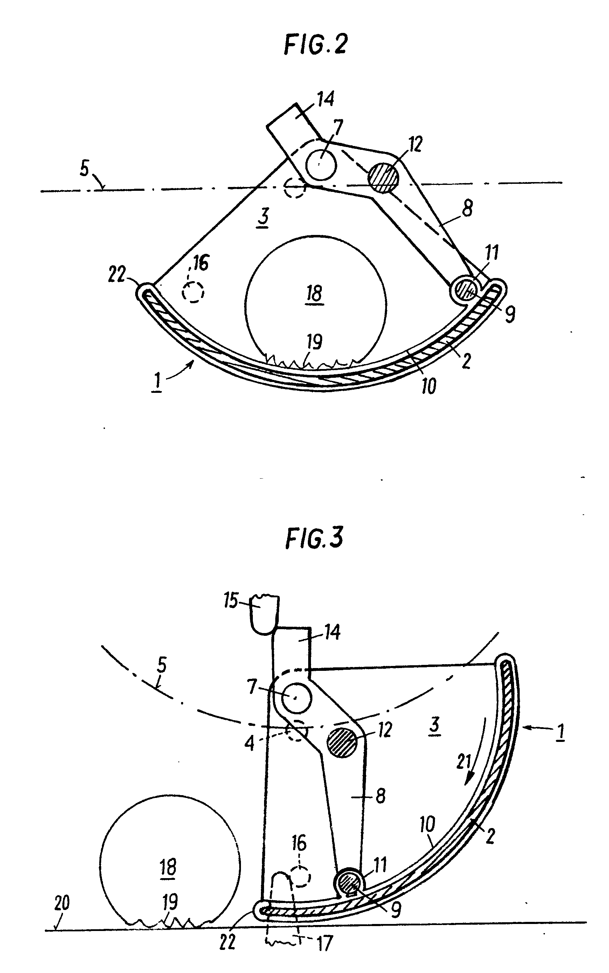

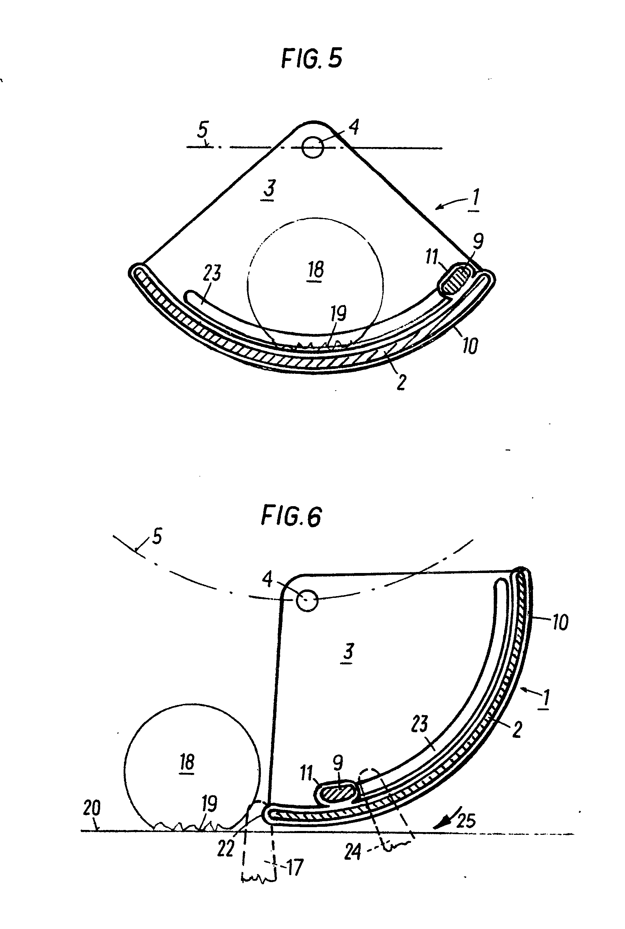

In der Zeichnung sind Ausführungsbeispiele des Erfindungsgegenstandes schematisch dargestellt. Fig. 1 zeigt eine erste Ausführungsform eines erfindungsgemäßen Gehänges in perspektivischer Ansicht. Die Fig. 2 und 3 zeigen jeweils einen Schnitt quer zur Längserstreckung des Gehänges nach Fig. 1 in zwei Betriebsstellungen. Fig. 4 zeigt eine Ausführungsvariante zu Fig. 3. Die Fig. 5 und 6 zeigen eine weitere Ausführungsvariante in zwei verschiedenen Betriebsstellungen.

Bei der Ausführungsform nach den Fig. 1 bis 3 hat das Gehänge 1 zum Transport der Teigstücke durch einen Gärschrank od. dgl. eine starre Auflage 2, die als gewölbte Blechtasse ausgebildet ist.

Die Auflage 2 ist an zwei seitlichen Wangen 3 aus Blech befestigt, deren jede einen nach außen horizontal wegstehenden Zapfen 4 trägt, welche beiden Zapfen 4 zum Einhängen des Gehänges 1 an in den Fig. 2 und 3 nur schematisch dargestellte Umlaufketten 5 dienen, so daß das Gehänge 1 an diesen Umlaufketten 5 um eine horizontale Achse 6 schwenkbar befestigt ist. Ferner ist an jeder Wange 3 um eine Achse 7 ein Hebel 8 schwenkbar gelagert, der bis nahe an die Auflage 2 reicht. An ihren unteren Enden sind die beiden Hebel 8 durch eine Stange 9 verbunden, die an einem Textilband 10 in Form eines Filztuches befestigt ist, das in einer endlosen Schleife um die Auflage 2 entlang deren Oberfläche herumgeführt ist. Hiezu kann die Stange 9 in eine Schlaufe 11 des Textilbandes 10 eingenäht sein (Fig. 2, 3). Zur Absteifung dient eine die beiden Hebel 8 in deren Mittenbereich verbindende weitere Stange 12, wobei in der Mitte der Längserstreckung des Gehänges 1 zwischen den beiden Stangen 9, 12 eine starre Verbindung 13 vorgesehen ist. Jeder Hebel 8 trägt ferner einen Mitnehmer 14, der mit einem Anschlag 15 (Fig. 3) zusammenwirkt, der in die Bewegungsbahn des Mitnehmers 14 ragt. Ferner tragen die beiden Wangen 3 unten je einen nach außen abstehenden Zapfen 16, der mit einem ortsfesten Anschlag 17 zusammenwirkt, der in die Bewegungsbahn des Zapfens 16 ragt.

Die Funktion ist wie folgt : Die Teigstücke 18 liegen mit ihrem Schluß 19 nach unten auf dem auf der Auflage 2 aufliegenden Textilband 10 nach der Eingabe in das Gehänge 1 auf (Fig. 2) und werden in dieser Lage vom Gehänge 1 durch den Gärschrank hindurchgeführt. Soll nun das Teigstück nach erfolgter Gare auf eine Unterlage 20 (Fig. 3) übergegeben werden, so trifft der Mitnehmer 14 auf den Anschlag 15, wodurch die Stange 9 und damit das an ihr befestigte, die Teigstücke 18 tragende Textilband 10 in Richtung des Pfeiles 21 (Fig. 3) relativ zur Auflage 2 verschoben wird. Dadurch werden die auf dem jeweiligen Gehänge 1 liegenden Teigstücke 18 zum in Bewegungsrichtung des Gehänges voranliegenden Rand 22 der Auflage 2 hin transportiert, Zugleich wird das Gehänge 1 mittels des am Anschlag 17 zur Anlage kommenden Zapfens 16 um die Anlenkachse 6 gekippt, so daß die Teigstücke 18 ohne zu fallen von der Auflage 2 bzw. dem auf ihr liegenden Textilband 10 auf die knapp unterhalb des Gehänges angeordnete Unterlage 20 übergeben werden. Dies wird dadurch unterstützt, daß die Teigstücke 18 vom Textilband 10 während dessen Bewegung über den Rand 22 der Auflage 2 leicht und sicher abgelöst werden, so daß die Teigstücke 18 mit der bisher auf dem Tuch aufliegenden Seite (Schluß 19) auch auf der Unterlage 20 zu liegen kommen. Auf diese Weise wird ein schonendes Wechseln der die Teigstücke tragenden Unterlage erzielt. Zweckmäßig ist hiebei die Anordnung so getroffen, daß im Moment, in welchem das Gehänge 1 gekippt wird und daher (in Bezug auf seine Weiterbewegung im Gärschrank) stillsteht, die Geschwindigkeit der Unterlage 20 gleich groß ist wie die Geschwindigkeit, mit der die Teigstücke 18 vom Textilband 10 über den Rand 22 transportiert werden. Es kann jedoch auch die Übergabe so erfolgen, daß die die Teigstücke aufnehmende Unterlage 20 im Moment der Übergabe der Teigstücke 18 stillsteht, wobei auch das Textilband 10 bzw. das es bewegende Gestänge in Ruhe gehalten wird. In diesem Fall müßte durch eine weitere, nicht dargestellte Vorrichtung die Auflage 2 in Bezug auf das Textilband 10 bzw. die es führende Stange 9 verschwenkt werden, so daß das Textilband 10 die Teigstücke 18 auf die Unterlage 20 übergeben kann.

Bei der Ausführungsform nach Fig. 4 ist die Ausbildung des Gehänges und der seine Bewegung beeinflussenden Anschläge 15, 17 gleich wie bei der Ausführungsform nach den Fig. 1 bis 3, jedoch liegt die Unterlage 20 nicht unmittelbar unterhalb der Auflage 2, sondern in einem bestimmten Abstand a unter dieser. Dadurch ist es möglich, die Teigstücke bei der Ablegung von den Gehängen 1 auf die Unterlage 20 umzudrehen, so daß also der Schluß 19 der Teigstücke 18 nach dem Ablegevorgang nach der entgegengesetzten Seite zeigt als zuvor. Dies ist insbesondere für die Herstellung von geformten Gebäckstücken von Vorteil. Es ist zweckmäßig, diesen Abstand a, etwa durch Höhenveränderung der Unterlage 20, variabel zu gestalten, um sich an verschiedene Größen der von den Gehängen 1 transportierten Teigstücke 18 anpassen zu können.

Bei der Ausführungsform nach den Figuren 5 und 6 ist die Vorrichtung, die zur Bewegung des Textilbandes 10 relativ zur Auflage 2 dient, anders als bei der Ausführungsform nach den Fig. 1 bis 3. Zwar ist auch gemäß Fig. 5 und 6 eine in Richtung der Anlenkachse 6 verlaufende Stange 9 vorgesehen, an der das Textilband 10 mittels einer Schlaufe 11 befestigt ist, jedoch ist diese Stange 9 mit ihren beiden Enden durch Schlitze 23 in den beiden Wangen 3 hindurchgeführt. Die außen über die Wangen 3 hinausstehenden Enden der Stange 9 bilden Mitnehmer, die durch einen in Richtung des Pfeiles 25 bewegten Anschlag 24 während des Abkippvorganges so mitgenommen werden, daß die Teigstücke 18 durch das Textilband 10 zum Rand 22 der Auflage 2 transportiert und dadurch mit größter Schonung auf die Unterlage 20 abgelegt werden. Die Kippung des Gehänges 1 erfolgt in der bereits beschriebenen Weise durch einen Anschlag 17, der an einem Mitnehmer oder auch am vorderen Rand 22 des Gehänges 1 zur Anlage kommt. Die erwähnte Abgabe der Teigstücke 18 erfolgt gemäß Fig. 6 mit unveränderter Orientierung des Schlusses 19, jedoch ist ebenso, wie dies im Zusammenhang mit Fig. 4 beschrieben wurde, auch eine Wendung der Teigstücke um 180° dadurch möglich, daß die Unterlage 20 entsprechend abgesenkt wird. Bei der Ausführungsform nach den Figuren 5 und 6 ist die Stange 9 etwas breiter ausgebildet als bei der Ausführungsform nach den Figuren 1 bis 4. Um auch bei einer solchen breiten Stange zu sichern, daß das Textilband 10 über die gesamte Bogenlänge der Auflage 2 (gemessen in Laufrichtung des Gehänges 1) bewegt werden kann, können die Wangen 3 seitlich über die Auflage 2 hinaus verbreitert werden.

In den Fig. 3, 4 und 6 ist die Bahn der Umlaufkette 5 gekrümmt dargestellt. Dies ergibt sich daraus, daß im Bereich der Teigstückablage die Umlaufketten 5 über Umlenkräder geführt werden.

## Ansprüche

1. Teigstücktransportgehänge (1) für Gärschränke oder dgl., welches an ein Transportsystem, insbesondere zwei zu beiden Seiten des Gehänges (1) verlaufende Ketten (5), um eine horizontale Achse (6) schwenkbar anhängbar ist, wobei die Teigstücke (18) auf einem Textilband (10) aufruhen, das normal zur Schwenkachse (6) des Gehänges (1) bewegbar ist und das auf einer Auflage (2) flächig aufliegt, um die das Textilband (10) in Form einer geschlossenen Schleife herumgelegt ist, dadurch gekennzeichnet, daß das Textilband (10) an einer Stange (9) befestigt ist, die sich parallel zur Schwenkachse (6) des Gehänges (1) und normal zur Transportrichtung desselben erstreckt und durch den Antrieb zum Transport der Teigstücke zum Rand (22) der Auflage (2) hin bewegbar ist.

2. Gehänge nach Anspruch 1, dadurch gekennzeichnet, daß der Antrieb einen Mitnehmer (14) aufweist, dem ein in seine Bewegungsbahn ragender Anschlag (15) zugeordnet ist, und daß der Mitnehmer (14) an einem um die Schwenkachse (6) des Gehänges (1) oder einer dazu parallelen Achse (7) schwenkbaren Hebel (8) angeordnet ist, der bis nahe an die Auflage (2) reicht und dort mittels der Stange (9) mit dem Textilband (10) verbunden ist (Fig. 1 bis 4).

3. Gehänge nach Anspruch 2, dadurch gekennzeichnet, daß zwei Hebel (8) an den beiden Enden der Auflage (2) vorgesehen und durch die am Textilband (10) befestigte Stange (9) sowie durch eine weitere, zwischen dieser und der Schwenkachse (7) der Hebel (8) angeordnete Stange (12) verbunden sind, wobei die beiden Stangen (9, 12) vorzugsweise durch eine Verbindung (13) gegeneinander abgesteift sind (Fig. 1 bis 4).

4. Gehänge nach Anspruch 1, dadurch gekennzeichnet, daß die Stange (9) durch einen Schlitz (23) an zumindest einer seitlichen Wange (3) des Gehänges (1) hindurchreicht und mit ihren außerhalb der Wange (3) liegenden Ende den Mitnehmer bildet, dem ein bewegter Anschlag (24) zugeordnet ist (Fig. 5, 6).

5. Gehänge nach einem der Ansprüche 1 bis 4, dadurch gekennzeichnet, daß die Auflage (2) von einer gewölbten Tasse gebildet ist.

## Claims

1. Hanger (1) for dough piece conveyors for fermentation chambers or the like, which can be hanged pivotable around a horizontal axis (6) to a conveying system, particularly two chains (5) running on both sides of the hanger (1), wherein the dough pieces (18) rest on a textile band (10) which can be moved perpendicularly to the pivoting axis (6) of the hanger (1) and which rests on an area of a support (2) around which the textile band (10) is laid in form of a closed loop, characterized in that the textile band (10) is fixed to a rod (9) extending parallely to the pivoting axis (6) of the hanger (1) and perpendicularly to the conveying direction thereof, which rod can be moved by the drive means for conveying the dough pieces towards the edge (22) of the support (2).

2. Hanger according to claim 1, characterized in that the drive means has a counter-stop (14) associated to a stop (15) protruding into the path of travel of the counter-stop, and that the counter-stop (14) is arranged on a lever (8) pivotable around the pivoting axis (6) of the hanger (1) or around an axis (7) arranged parallely thereto, which lever extends near to the support (2) and is there connected by means of the rod (9) to the textile band (10) (Fig. 1 to 4).

3. Hanger according to claim 2, characterized in that two levers are provided on the the two ends of the support (2) and are connected by the rod (9) fixed to the textile band (10) and by a further rod (12) arranged between the rod (9) and the pivoting axis (7) of the levers (8), the two rods (9, 12) being preferably stiffened against each other by a connection (13) (Fig. 1 to 4).

4. Hanger according to claim 1, characterized in that the rod (9) extends through a slot (23) on at least one lateral wall (3) of the hanger (1) and forms the counter-stop with its end arranged outwardly with respect to this wall (3), a moved stop (24) being associated to the counter-stop (Fig. 5, 6).

5. Hanger according to any of claims 1 to 4, characterized in that the support (12) is formed by a vaulted cup.

## Revendications

1. Transporteur de morceaux de pâte de pain à balancelle (1) pour armoires de fermentation ou similaires, suspendu pivotant autour d'un axe horizontal (6) à un système de transport, notamment deux chaînes (5) courant des deux côtés de la balancelle (1), les morceaux de pâte (18) reposant sur une bande textile (10) mobile perpendiculairement à l'axe de pivotement (6) de la balancelle (1) et portant à plat sur un support (2) autour duquel la bande textile (10) est disposée en forme de boucle fermée, le dispositif étant caractérisé par le fait que la bande textile (10) est fixée à une barre (9) s'étendant parallèle à l'axe de pivotement (6) de la balancelle (1) et perpendiculaire par rapport au sens de transport de celle-ci, et que ladite bande se déplace sous l'effet de la commande pour le transport des morceaux de pâte de pain en direction du bord (22) du support (2).

2. Transporteur à balancelle selon la revendication 1, caractérisé par le fait que la commande comporte un toc d'entraînement (14) auquel est associée une butée (15) faisant saillie sur la trajectoire de mouvement dudit toc, et par le fait que ce toc d'entraînement (14) est monté sur un levier (8) pivotant autour de l'axe de pivotement de la balancelle (1) ou sur un axe (7) parallèle à celle-ci, s'étendant jusqu'à proximité du support (2), et étant tendu au moyen de la barre (9) reliée à la bande textile (10) (figures 1 à 4).

3. Transporteur à balancelle selon la revendication 2, caractérisé par le fait que deux leviers (8) sont prévus aux deux extrémités du support (2) et sont reliés par la barre (9) fixée à la bande textile (10), ainsi que par une autre barre (12) disposée entre la barre (9) et l'axe de pivotement (7) des leviers (8), les deux barres (9, 12), étant de préférence arc-boutées rigides l'une contre l'autre par une pièce de raccordement (13) (figures 1 à 4).

4. Transporteur à balancelle selon la revendication 1, caractérisé par le fait que la barre (9) dépasse par une fente (23) sur au moins une joue latérale (3) de la balancelle (1) et forme par son extrémité située extérieurement à la joue (3) le toc d'entraînement auquel est associée une butée mobile (24) (figures 5 et 6).

5. Transporteur à balancelle selon une des revendications 1 à 4, caractérisé par le fait que le support (2) est formé par une tasse bombée.

FIG.1

6

14

4

8

3

16

2

1

9

13

12

10

7

14

8

4

3

2

16

FIG.4

15

14

5

7

4

12

8

10

3

1

21

16

11

2

19

22

9

18

17

20

a

0 059 180

## FIG.2

## FIG.3

## FIG. 5

## FIG. 6